# EUROPÄISCHE PATENTSCHRIFT

(11) **EP 2 748 032 B1**
(45) Veröffentlichungstag und Bekanntmachung des Hinweises auf die Patenterteilung: **24.06.2020**
(21) Anmeldenummer: 12733669.1
(22) Anmeldetag: 03.07.2012
(51) Int. Cl.: B60Q 1/08

(54) **VERFAHREN UND VORRICHTUNG ZUR ANSTEUERUNG EINES SCHEINWERFERS EINES FAHRZEUGS**
METHOD AND DEVICE FOR CONTROLLING A HEADLAMP OF A VEHICLE
PROCÉDÉ ET DISPOSITIF DE COMMANDE D'UN PHARE DE VÉHICULE

(30) Priorität: 23.08.2011 DE 102011081357
(43) Veröffentlichungstag der Anmeldung: 02.07.2014
(73) Patentinhaber: Robert Bosch GmbH, 70442 Stuttgart (DE)
(72) Erfinder: GALBAS, Roland, 71640 Ludwigsburg (DE)
(86) Internationale Anmeldenummer: PCT/EP2012/062915
(87) Internationale Veröffentlichungsnummer: WO 2013/026608

(56) Entgegenhaltungen:
- EP-A1- 2 127 944
- DE-A1- 10 060 734
- DE-A1-102007 048 717

## Beschreibung

### Stand der Technik

Die vorliegende Erfindung bezieht sich auf ein Verfahren zur Ansteuerung eines Scheinwerfers eines Fahrzeugs, auf eine entsprechende Vorrichtung sowie auf ein entsprechendes Computerprogrammprodukt.

Mit Scheinwerfern wird das Vorfeld eines Fahrzeugs ausgeleuchtet. Bei schlechter Sicht kann diese Ausleuchtung aus Sicht eines Fahrers des Fahrzeugs als nicht ausreichend empfunden werden.

DE 102 54 806 B4 zeigt ein Verfahren zur Informationsverarbeitung von wenigstens zwei Informationsquellen in einem Kraftfahrzeug.

EP 2 127 944 A1 befasst sich mit einem Verfahren zum Steuern der Lichtabgabe eines Frontscheinwerfers eines Fahrzeugs. Zumindest dann, wenn ein Objekt als ein lichtreflektierendes Objekt detektiert wird, wird die Helligkeit der Abbildung des Objekts ermittelt. Die Lichtabgabe mindestens eines Frontscheinwerfers des Fahrzeugs wird abhängig von der ermittelten Helligkeit der Abbildung des Objekts gesteuert.

DE 100 60 734 A 1 befasst sich mit einem Kraftfahrzeug mit Mitteln zur Beleuchtung von Verkehrsschildern. Es wird vorgeschlagen, Bilder einer nach vorne gerichteten Kamera, im Hinblick auf im vor dem Fahrzeug liegenden Raum befindliche Verkehrsschilder auszuwerten, und die erkannten Schilder mittels eines speziellen Scheinwerfers zu beleuchten.

### Offenbarung der Erfindung

Vor diesem Hintergrund wird mit der vorliegenden Erfindung ein Verfahren zur Ansteuerung eines Scheinwerfers eines Fahrzeugs, weiterhin eine Vorrichtung, die dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass reflektierende Elemente in einem Umfeld eines Fahrzeugs gezielt beleuchten werden können, um sie für den Fahrer des Fahrzeugs deutlich sichtbar erscheinen lassen. Dabei können insbesondere reflektierende Elemente hervorgehoben werden. Die Beleuchtung der reflektierenden Elemente kann mittels eines oder mehreren Scheinwerfer des Fahrzeugs erfolgen.

Bei sehr schlechter Sicht, wie sie aufgrund starken Regens, Nebel oder Schneefall herrschen kann, können vorauseilende Fahrzeuge, gefährliche Objekte oder wichtige Objekte trotz leistungsstarker Scheinwerfer nur schwach beleuchtet werden. Dies kann durch eine Nutzung von Lichtreflexionszonen auf vorausfahrenden Fahrzeugen bzw. wichtigen Objekten bei sehr schlechter Sicht oder einer gezielten Hervorhebung eines Führungsfahrzeugs verbessert werden. Eine entsprechende Reflexionsnutzung ermöglicht eine gezielte Hervorhebung wichtiger Objekte insbesondere in Fahrtrichtung vor dem Fahrzeug, gerade auch bei schlechter Sicht.

Der Ansatz kann im Zusammenhang mit Fahrzeugstrassenbeleuchtungssystemen eingesetzt werden, die die Fähigkeit einer variablen Lichtpositionierung und variablen Intensitätseinstellung, also beispielsweise eine variable Lichtstrahlrichtung, aufweisen.

Der Ansatz kann auch im Zusammenhang mit Umfeldsensoriksystemen wie einem Videosensoriksystem, einem Radarsensoriksystem oder weiteren Systemen wie TOF (time of flight - wie PMD Systeme) eingesetzt werden. Solche Systeme werden vermehrt in Fahrzeugen eingesetzt. Zusätzlich kann auf Fahrzeug zu Fahrzeug Kommunikation oder Fahrzeug zu Infrastruktur Kommunikation zugegriffen werden.

Die vorliegende Erfindung schafft ein Verfahren zur Ansteuerung eines Scheinwerfers eines Fahrzeugs, das die Schritte gemäß Anspruch 1 umfasst.

Bei dem Fahrzeug kann er sich beispielsweise um einen Personenkraftwagen oder um einen Lastkraftwagen handeln. Bei dem Scheinwerfer kann es sich um einen Teil eines Fahrzeugstrassenbeleuchtungssystems handeln, beispielsweise um einen Frontscheinwerfer, der ausgebildet ist, um einen Bereich des Umfelds, insbesondere des Vorfelds, des Fahrzeugs auszuleuchten. Bei dem Bild kann es sich um ein Bild handeln, das über eine Schnittstelle direkt von einer Bilderfassungseinrichtung empfangen wird. Alternativ kann es sich um ein Bild handeln, das auf einem von einer Bilderfassungseinrichtung aufgenommenen Bild basiert und das mittels einer Bildaufbereitung aufbereitet wurde. Auch kann der Ausdruck Bild stellvertretend für einen Bildausschnitt eines größeren Originalbildes verstanden werden. Bei der Bilderfassungseinrichtung kann es sich um eine Kamera des Fahrzeugs handeln, die ausgebildet ist, um zumindest einen Bereich des Umfelds des Fahrzeugs zu erfassen und in Form des Bildes abzubilden. Insbesondere kann die Bilderfassungseinrichtung ausgebildet sein, um einen von dem Scheinwerfer ausgeleuchteten Bereich des Umfelds und somit von dem Scheinwerfer ausgestrahltes und an der Reflexionszone reflektiertes Licht zu erfassen. Bei dem Bild kann es sich um ein digitales Bild handeln, dass aus einer Vielzahl von Bildpunkten zusammengesetzt ist. Jeder Bildpunkt kann eine Information über eine Lichtintensität umfassen. Zur Bildauswertung kann auf bekannte Verfahren zurückgegriffen werden. Durch die Bildauswertung können helle Bereiche des von dem Bild abgebildeten Umfelds von dunklen Bereichen des abgebildeten Umfelds unterschieden werden. Die Reflexionszone kann in dem Bild als ein Bereich abgebildet sein, dem eine große Helligkeit zugewiesen ist. Auch kann die Bildauswertung eine Objekterkennung umfassen, durch die typische Formen und Größen von relevanten Reflexionszonen erkannt werden können. Bei der Reflexionszone handelt es sich um ein reflektierendes Element eines Fahrzeugs (z.B. Katzenaugen, Rücklichter oder Nummernschilder). Das reflektierende Element kann beispielsweise eine reflektierende Farbe oder eine reflektierende Oberflächenform aufweisen, um einfallendes Licht reflektieren zu können. Das Ansteuersignal zum Ansteuern des Scheinwerfers kann ausgebildet sein, um die Lichtaussendung des Scheinwerfers zu steuern oder einzustellen. Das Ansteuersignal kann über eine Schnittstelle direkt an den Scheinwerfer oder an ein Steuergerät des Scheinwerfers bereitgestellt werden. Wurde von der Bildauswertung eine Reflexionszone erkannt und als relevant eingestuft, beispielsweise basierend auf Kriterien zur sicheren Führung des Fahrzeugs auf einer Fahrbahn, so kann die Lichtaussendung des Scheinwerfers zu eingestellt werden, dass die Reflexionszone hervorgehoben wird. Beispielsweise kann die Reflexionszone stärker beleuchtet werden, als das direkte oder weitere Umfeld der Reflexionszone. Der Scheinwerfer kann Teil eines Fahrzeugstrassenbeleuchtungssystems des Fahrzeugs sein. Bei dem Scheinwerfer kann es sich um einen Frontscheinwerfer oder um ein System aus beiden Frontscheinwerfern des Fahrzeugs handeln. Auch kann es sich um einen zu den herkömmlichen Frontscheinwerfern zusätzlichen Scheinwerfer oder um eine zusätzliche Lichtquelle handeln, die speziell zur Hervorhebung einer oder mehrere erkannter Reflexionszonen eingesetzt wird. Der Scheinwerfer kann eine einstellbare Leuchtcharakteristik handeln. Über die Leuchtcharakteristik kann eine Helligkeit oder Intensität und eine Verteilung des von dem Scheinwerfer ausgestrahlten Lichts definiert werden. Durch eine geeignete Ansteuerung des Scheinwerfers kann das von dem Scheinwerfer ausgestrahlte Licht der Leuchtcharakteristik entsprechen. Durch die Leuchtcharakteristik kann definiert werden, dass unterschiedliche Segmente oder Bereiche eines von dem Scheinwerfer ausgestrahlten Lichtbündels unterschiedliche Lichtintensitäten aufweisen. Auf diese Weise können von dem Scheinwerfer angestrahlte Bereiche des Umfelds unterschiedliche Lichtintensitäten zugewiesen werden. Durch das Einstellen der Leuchtcharakteristik kann somit eine Lichtverteilung in dem von dem Scheinwerfer ausgeleuchteten Bereich des Umfelds des Fahrzeugs eingestellt werden. Die Leuchtcharakteristik kann beispielsweise durch gezieltes Ansteuern einzelner Lichtquellen des Scheinwerfers, durch Dimmen einzelner Bereiche des Scheinwerfers oder Einstellen von Fokussierungselementen des Scheinwerfers eingestellt werden.

Das Verfahren kann einen Schritt des Beurteilens einer in dem Umfeld des Fahrzeugs herrschenden Sicht umfassen. Dabei kann der Schritt des Bereitstellens des Ansteuersignals durchgeführt werden, wenn die Sicht als schlecht beurteilt wird und zumindest der Schritt des Bereitstellens des Ansteuersignals kann nicht durchgeführt werden, wenn die Sicht als gut beurteilt wird. Die Beurteilung der Sicht kann anhand vorgebbarer Kriterien erfolgen, die sich beispielsweise auf eine für den Fahrer des Fahrzeugs ergebende maximale aktuelle Sichtweite beziehen können. Wird die Sicht als gut eingestuft, so ist es nicht erforderlich die Reflexionszone hervorzuheben. Wird die Sicht dagegen als schlecht eingestuft, so kann die Reflexionszone hervorgehoben werden, um den Fahrer oder einem Fahrassistenzsystem beispielsweise die Orientierung zu erleichtern. Demnach können je nach Beurteilung der Sicht einzelne oder alle weiteren der Schritte des Verfahrens ausgeführt oder nicht ausgeführt werden.

Gemäß der Erfindung umfasst das Verfahren einen Schritt des Ermittelns des Objekts als ein dem Fahrzeug vorrausfahrendes Fahrzeug. Das Objekt kann basierend auf dem Bild, zeitlich vorangegangen oder nachfolgend erfasster Bilder oder anderer von einem System des Fahrzeugs erfasster oder empfangener Informationen ermittelt werden. Ansprechend auf das Ermitteln des Objekts kann eine bereits erkannte Reflexionszone dem Objekt zugeordnet werden oder es kann nach einer für das Objekt typischen Reflexionszone gesucht werden. Bei dem vorrausfahrenden Fahrzeug kann es sich um ein direkt vor dem das Verfahren ausführenden Fahrzeug fahrenden Fahrzeug handeln. Durch das Hervorheben einer Reflexionszone des vorrausfahrenden Fahrzeugs kann es dem Fahrer des nachfolgenden Fahrzeugs erleichtert werden, einen korrekten Abstand zu dem Fahrzeug einzuhalten. Auch kann eine Einhaltung der Fahrspur erleichtert werden, da Kurven im Verlauf der Fahrspur aufgrund der Bewegung des vorrausfahrenden Fahrzeugs frühzeitig erkannt werden können.

Zusätzlich umfasst das Verfahren eines Schritt des Durchführens einer Bildauswertung, um in zumindest einem Bild eines Umfelds des Fahrzeugs eine Reflexionszone eines sich im Umfeld des Fahrzeugs befindlichen Objekts zu erkennen. Bei dem Objekt kann es sich um ein zur Lösung einer Fahraufgabe, beispielsweise dem sicheren Führen des Fahrzeugs auf einer Fahrbahn oder dem Finden eines Fahrtzieles, wichtiges Objekt handeln. Informationen über entsprechende Objekte können gespeichert sein und von der Bildauswertung eingesetzt werden, um ein entsprechendes Objekt zu erkennen.

Generell kann das Verfahren somit einen Schritt des Ermittelns des Objekts als ein bezüglich einer von einem Fahrer des Fahrzeugs durchzuführenden Fahraufgabe relevantes Objekt umfassen. Dabei handelt es sich bei dem Objekt um ein bewegliches Objekt, wie ein vorauseilendes Fahrzeug.

Gemäß einer Ausführungsform kann das Ansteuersignal ausgebildet sein, um zumindest einen Lichtstrahl des Scheinwerfers auf die Reflexionszone auszurichten, um die Lichtaussendung des Scheinwerfers in Richtung der Reflexionszone zu intensivieren. Dies bietet sich bei einem Scheinwerfer an, der eine oder mehrere Lichtquellen umfasst, die eine einstellbare Abstrahlungsrichtung aufweisen. Um die Reflexionszone hervorzuheben, kann somit eine Strahlungsrichtung des zumindest einen Lichtstrahls so verändert werden, dass der zumindest eine Lichtstrahl auf die Reflexionszone ausgerichtet ist.

Auch kann das Ansteuersignal ausgebildet sein, um eine Lichtverteilung des Scheinwerfers zu verändern, um die Lichtaussendung des Scheinwerfers in Richtung der Reflexionszone zu intensivieren. Dies bietet sich bei einem Scheinwerfer an, bei dem die Lichtverteilung einstellbar ist.

Erfindungsgemäß ist das Ansteuersignal ausgebildet , um eine Lichtaussendung des Scheinwerfers auf die Reflexionszone zu konzentrieren, um die Lichtaussendung des Scheinwerfers in Richtung der Reflexionszone zu intensivieren. Dies bietet sich bei einem Scheinwerfer an, der eine Fokussierungseinrichtung zur Fokussierung zumindest eines Teils des ausgesendeten Lichts aufweist.

Das Verfahren kann einen Schritt des Erkennens einer Bewegung der Reflexionszone relativ zu dem Fahrzeug und einen Schritt des Bereitstellens eines weiteren Ansteuersignals zum Ansteuern des Scheinwerfers umfassen. Dabei kann das weitere Ansteuersignal ausgebildet sein, um eine weitere Lichtaussendung des Scheinwerfers der Bewegung der Reflexionszone nachzuführen. Das weitere Ansteuersignal kann zeitlich nach dem ursprünglichen Ansteuersignal zur Intensivierung der Lichtaussendung des Scheinwerfers in Richtung der Reflexionszone bereitgestellt werden. Auf diese Weise ist kein erneutes Erkennen der Reflexionszone erforderlich. Stattdessen kann eine einmal erkannte Reflexionszone fortlaufend durch die Lichtaussendung des Scheinwerfers hervorgehoben werden.

Die vorliegende Erfindung schafft ferner eine Vorrichtung gemäß Anspruch 7, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt gemäß Anspruch 8 mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer ausgeführt wird.

Die Erfindung wird nachstehend anhand der beigefügten Zeichnungen beispielhaft näher erläutert. Es zeigen:
- Fig. 1: eine Situation mit zwei Fahrzeugen, gemäß einem Ausführungsbeispiel der vorliegenden Erfindung;
- Fig. 2: ein Blockschaltbild einer Vorrichtung zur Ansteuerung eines Scheinwerfers eines Fahrzeugs gemäß einem Ausführungsbeispiels der vorliegenden Erfindung; und
- Fig. 3: ein Ablaufdiagramm eines Verfahrens zur Ansteuerung eines Scheinwerfers eines Fahrzeugs gemäß einem Ausführungsbeispiels der vorliegenden Erfindung .

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

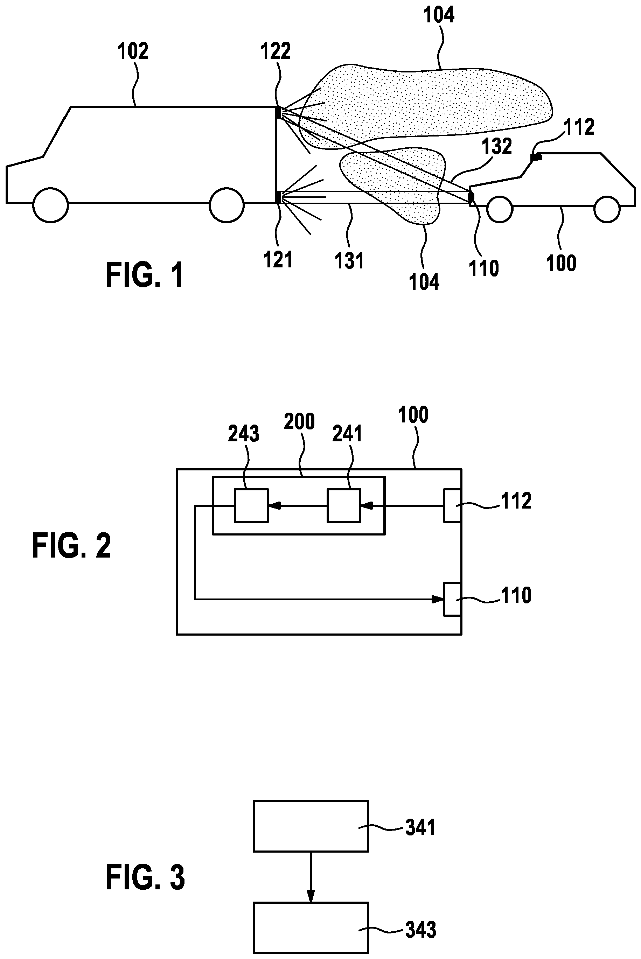

Fig. 1 zeigt eine Situation mit einem Fahrzeug 100 und einem vorausfahrenden Fahrzeug 102, gemäß einem Ausführungsbeispiel der vorliegenden Erfindung. Die Fahrzeuge 100, 102 bewegen sich in die gleiche Fahrtrichtung, wobei das Fahrzeug 102 dem Fahrzeug 100 direkt vorrausfährt. Die Sicht im Vorfeld des Fahrzeugs 100 ist aufgrund von Witterungseinflüssen, hier Nebel 104, schlecht, d.h. stark eingeschränkt. Für einen Fahrer des Fahrzeugs 100 ist das vorausfahrende Fahrzeug 102 aufgrund der schlechten Sicht nur schwer zu erkennen.

Das Fahrzeug 100 weist einen Scheinwerfer 110 auf. Der Scheinwerfer 110 kann ausgebildet sein, um das Vorfeld des Fahrzeugs 100 auszuleuchten und zusätzlich spezielle Bereiche des Vorfelds gezielt mit einer erhöhten Lichtintensität anzustrahlen. Alternativ kann der Scheinwerfer 110 als Zusatzscheinwerfer ausgebildet sein, der ausgebildet ist, um zusätzlich zu einem zur Ausleuchtung des Vorfelds eingesetzten Hauptscheinwerfer spezielle Bereiche des Vorfelds gezielt mit einer erhöhten Lichtintensität anzustrahlen. Um einen oder mehrere spezielle Bereiche des Vorfelds zu erkennen, die anschließend von dem Scheinwerfer 110 gezielt angestrahlt werden können, weist das Fahrzeug 100 eine Kamera 112 auf, die ausgebildet ist, um das Vorfeld des Fahrzeugs zu 100 erfassen.

Gemäß diesem Ausführungsbeispiel weist das vorrausfahrende Fahrzeug 102 eine erste Reflexionszone 121 und eine zweite Reflexionszone 122 auf. Die erste Reflexionszone 121 ist in einem unteren Abschnitt einer Rückseite des Fahrzeugs 102 und die zweite Reflexionszone 122 ist in einem oberen Abschnitt der Rückseite des Fahrzeugs 102 angeordnet. Bei den Reflexionszonen 121, 122 kann es sich beispielsweise um auf der Außenhaut des Fahrzeugs 102 angeordnete Reflexionselemente oder Reflexionsflächen handeln. Werden die Reflexionszonen 121, 122 angestrahlt, insbesondere von einer Lichtquelle des nachfolgenden Fahrzeugs 100, so erscheinen sie als helle Flächen, die insbesondere bei Dunkelheit und schlechter Sicht eine Erkennung des Fahrzeugs 102 von hinten erleichtern oder gar erst ermöglichen.

Der Scheinwerfer 110 ist ausgebildet, um die Reflexionszonen 121, 122 im Vergleich zu einem Umfeld der Reflexionszonen 121, 122 mit einer erhöhten Lichtintensität anzustrahlen. Beispielhaft sind zwei von dem Scheinwerfer 110 ausgestrahlte Lichtstrahlen 131, 132 gezeigt. Ein erster Lichtstrahl 131 ist ausgehend von dem Scheinwerfer 110 auf den ersten Reflektor 121 gerichtet. Ein zweiter Lichtstrahl 132 ist ausgehend von dem Scheinwerfer 110 auf den zweiten Reflektor 122 gerichtet. Der Scheinwerfer 110 kann ausgebildet sein, um ausschließlich auf die Reflexionszonen 121, 122 ausgerichtetes Licht, wie die Lichtstrahlen 131, 132 auszusenden. Alternativ kann der Scheinwerfer 110 ausgebildet sein, um zusätzlich zu den Lichtstrahlen 131, 132 mit einer großen Leuchtdichte weiteres Licht geringerer Leuchtdichte auszusenden, um das Vorfeld des Fahrzeugs 100 auszuleuchten. Je nach Ausführungsbeispiel können die Reflexionszonen 121, 122 sowohl von den Lichtstrahlen 131, 132 als auch von dem Licht geringerer Leuchtdichte oder ausschließlich von den Lichtstrahlen 131, 132 beleuchtet werden. Zumindest ein Anteil des auf die Reflexionszonen 121, 122 auftreffenden Lichts wird reflektiert und kann als reflektiertes Licht von dem Fahrer des Fahrzeugs 100 oder der Kamera 112 erfasst werden. Indem die Reflexionszonen 121, 122 pro Fläche mit einer größeren Lichtstärke bestrahlt werden, als ein die Reflexionszonen 121, 122 umgebender Bereich, beispielsweise die verbleibende Rückseite des Fahrzeugs 102, sind die Reflexionszonen 121, 122 für den Fahrer des Fahrzeugs 100 gut sichtbar oder auf einem Bild der Kamera 112 gut detektierbar.

Die in Fig. 1 gezeigten Reflexionszonen 121, 122 sind lediglich beispielhaft gewählt. Beispielsweise können die Reflexionszonen 121, 122 an einer anderen Position an dem Fahrzeug 102 angeordnet sein. Der Scheinwerfer 110 kann ausgebildet sein, um nur eine einzige Reflexionszone 121, 122 oder mehrere Reflexionszonen 121, 122 hervorzuheben. Zum Intensivieren oder Ausrichten eines Lichtstrahls 131, 132 kann der Scheinwerfer 110 geeignete technische Mittel aufweisen. Weist das Fahrzeug 100 mehrere, beispielsweise zwei, Scheinwerfer 110 auf, so können diese ausgebildet sein, um jeweils dieselbe oder dieselben oder unterschiedliche Reflexionszonen 121, 122 hervorzuheben.

Gemäß dem in Fig. 1 gezeigten Ausführungsbeispiel werden die Reflexionszonen 121, 122 bei schlechter Sicht, beispielsweise bei Nebel 104, besonders beleuchtet. Dies führt zu einer maximalen Lichtausnutzung.

In Situationen mit schlechter Sicht werden über die Scheinwerfer 110 besondere Reflexionszonen 121, 122 von vorauseilenden Fahrzeugen hervorgehoben, also explizit beleuchtet. Das heißt, die Lichtintensität wird aufgrund der sehr schlechten Sicht auf die Reflexionszonen 121, 122 konzentriert.

Diese Hervorhebung wird an einem Führungsfahrzeug 102 vorgenommen. Das Führungsfahrzeug 102 wird ähnlich wie bei ACC Systemen (Adaptive Cruise Control) ermittelt. Das Fahrzeug 100 hält in Fahrtrichtung eine ähnliche Geschwindigkeit, wie das vorrausfahrende Fahrzeug 102 ein. Damit wird dem Fahrer des Fahrzeugs 100 ein Führungslicht bei sehr schlechten Sichtverhältnissen geboten.

Im Weiteren können auch gefährliche Objekte mit besonderen Reflexionszonen explizit beleuchtet werden.

Gemäß einem Ausführungsbeispiel können in dem Fahrzeug 100 mehrere Sensierungen erfolgen. Zunächst kann die Situation sensiert werden. Es kann also eine sehr schlechte Sicht erkannt werden, die z.B. durch starken Regen, Nebel 104 oder Schneefall hervorgerufen ist. Ferner können vorauseilende Fahrzeuge 102, zum Teil in Fahrtrichtung als sogenannte Führungsfahrzeuge, oder gefährliche oder wichtige Objekte sensiert werden. Schließlich können besondere Lichtreflexionsflächen 121, 122 auf vorauseilenden Fahrzeugen 102 oder gefährlichen oder wichtigen Objekten sensiert werden. Basierend auf den durchgeführten Sensierungen erfolgt als eigentliche Funktion eine Beleuchtung von Führungsfahrzeugen 102 unter Ausnutzung von besonderen Reflexionszonen 121, 122. Dazu kann eine Nutzung einer variablen Lichtpositionierung bzw. variablen Lichtintensitätseinstellung, also einer variablen Lichtstrahlrichtung des Scheinwerfers 110 zur Hervorhebung der besonderen Reflexionszonen 121, 122 des vorauseilenden Führungsfahrzeuges 102 erfolgen.

Gemäß einem Ausführungsbeispiel folgt auf eine Erkennung einer Situation mit schlechter Sicht eine Erkennung von Reflexionszonen 121, 122. Anschließend wird eine Lichtveränderung des oder der Scheinwerfer 110 durchgeführt, um unter genannter Situation und Erkennung der Reflexionszonen 121, 122 eine Hervorhebung der Reflexionszonen 121, 122 durchzuführen.

Fig. 2 zeigt ein Blockschaltbild einer Vorrichtung 200 zur Ansteuerung eines Scheinwerfers 110 eines Fahrzeugs 100 gemäß einem Ausführungsbeispiels der vorliegenden Erfindung. Die Vorrichtung kann in dem in Fig. 1 gezeigten Fahrzeug 100 realisiert sein.

Die Vorrichtung 200 weist eine Schnittstelle zu dem Scheinwerfer 110 oder einem Steuergerät zum Ansteuern des Scheinwerfers 110 sowie eine Schnittstelle zu einer Kamera 112 oder einer Einrichtung zum Bereitstellen eines Bildes oder einer Bildinformation eines Bilds der Kamera 112 auf. Bei dem Scheinwerfer 110 und der Kamera 112 kann es sich um die anhand von Fig. 1 beschriebenen Einrichtungen handeln.

Die Vorrichtung 200 ist ausgebildet, um ein Bild oder eine Bildinformation eines Bildes der Kamera 112 zu empfangen und auszuwerten, um eine Information zum Ansteuern des Scheinwerfers 110 zu bestimmen und beispielsweise in Form eines Ansteuersignals auszugeben. Bezogen auf das in Fig. 1 gezeigte Ausführungsbeispiel kann das Bild zumindest die Rückseite des vorrausfahrenden Fahrzeugs mit den Reflexionszonen abbilden. Die von der Vorrichtung 200 bestimmte Information zur Ansteuerung des Scheinwerfers 110 kann geeignet sein oder dafür verwendet werden, den Scheinwerfer 110 so anzusteuern, dass die Reflexionszonen durch den Scheinwerfer 110 im Vergleich zu die Reflexionszonen umgebenden Bereichen besonders intensiv bestrahlt werden. Somit kann das Ansteuersignal geeignet sein, um eine Aussendung und Ausrichtung der in Fig. 1 gezeigten Lichtstrahlen 131. 132 zu bewirken.

Die Vorrichtung 200 weist eine Einrichtung 241 zum Durchführen einer Bildauswertung und eine Einrichtung 243 zum Bereitstellen des Ansteuersignals auf. Mittels der Bildauswertung kann das über die Schnittstelle der Vorrichtung 200 empfangene Bild der Kamera 112 oder eine darauf basierende Bildinformation ausgewertet werden, um eine Reflexionszone eines sich im Umfeld des Fahrzeugs 100 befindlichen relevanten Objekts zu erkennen. Ferner kann die Einrichtung 241 zum Durchführen einer Bildauswertung oder eine andere geeignete Einrichtung ausgebildet sein, um eine Position der Reflexionszone relativ zum Fahrzeug 100 und insbesondere relativ zu dem Scheinwerfer 110 zu bestimmen. Ferner kann eine Größe oder flächenmäßige Ausdehnung der Reflexionszone bestimmt werden. Eine Information über die Art und zusätzlich die Position einer Reflexionszone sowie eines die Reflexionszone umfassenden Objekts kann auch über eine Schnittstelle zu einem weiteren System des Fahrzeugs 100, beispielsweise einer Abstandsmessungseinrichtung oder einer Kommunikationsschnittstelle zum Empfangen von Daten, die beispielsweise von dem Objekt ausgesendet sind, empfangen werden. Eine zur Ansteuerung des Scheinwerfers 110 relevante Information über die Reflexionszone wird an die Einrichtung 243 zum Bereitstellen ausgegeben. Die Einrichtung 243 zum Bereitstellen ist ausgebildet, um basierend auf der Information über die Reflexionszone das Ansteuersignals zum Ansteuern des Scheinwerfers zu bestimmen. Das Ansteuersignal kann von der Vorrichtung 200 über die entsprechende Schnittstelle ausgegeben werden.

Fig. 3 zeigt ein Ablaufdiagramm eines Verfahrens zur Ansteuerung eines Scheinwerfers eines Fahrzeugs gemäß einem Ausführungsbeispiels der vorliegenden Erfindung. Das Verfahren kann von der in Fig. 2 gezeigten Vorrichtung ausgeführt werden. Das Umfeld kann von einem Scheinwerfer des Fahrzeugs auf herkömmliche Art gleichmäßig oder entsprechend einer fest eingestellten oder vorgebbaren Leuchtcharakteristik ausgeleuchtet sein. Die Leuchtcharakteristik kann beispielsweise dazu beitragen, dass der Gegenverkehr nicht geblendet wird oder eine Kurve besser ausgeleuchtet wird.

In einem Schritt 341 wird ein Bild eines Umfelds des Fahrzeugs ausgewertet. Je nach Situation kann in dem Bild des Umfelds beispielsweise ein vorrausfahrendes Fahrzeug oder ein für die Fahrt des Fahrzeugs relevantes Objekt abgebildet sein. Das vorrausfahrende Fahrzeug oder das Objekt können über eine Reflexionszone kenntlich gemacht sein, deren Reflexion ebenfalls von dem Bild abgebildet ist. Das Bild kann in einem vorrangegangen Schritt erfasst worden sein. Auch können im Schritt 341 mehrere aufeinanderfolgend, oder von unterschiedlichen Kameras erfasste Bilder ausgewertet werden.

In einem Schritt 343 wird ein Ansteuersignal zum Ansteuern des Scheinwerfers bestimmt und bereitgestellt, das geeignet ist, um eine Lichtaussendung des Scheinwerfers in Richtung der Reflexionszone zu intensivieren. Aufgrund der Intensivierung wird die bisherige Ausleuchtung des Umfelds des Fahrzeugs geändert. Insbesondere wird die Beleuchtung der Bereiche des Umfelds, die der Reflexionszone zugeordnet sind, verstärkt. Die Beleuchtung der übrigen Bereiche des Umfelds kann dabei entweder gleich bleiben oder gegebenenfalls bereichsabhängig verringert werden. Auf diese Weise kann der Kontrast zwischen der Reflexionszone und den übrigen Bereichen oder zumindest der an die Reflexionszone angrenzenden Bereiche und somit die Sichtbarkeit der Reflexionszone erhöht werden.

Die Schritte 341, 343 können fortlaufend wiederholt werden, um die Reflexionszone fortlaufend hervorzuheben und fortlaufend nach weiteren Reflexionszonen zu suchen. Ferner kann fortlaufend die Sichtweite aus der Sichtweise des Fahrers des Fahrzeugs 100 überprüft werden. Die Schritte 341, 343 können ansprechend darauf nur dann ausgeführt werden, wenn sich die Sichtweite als schlecht erweist, beispielsweise unterhalb einer vorgebbaren Schwelle liegt. Erweist sich die Sichtweite als gut ist keine Intensivierung der Beleuchtung einer Reflexionszone erforderlich.

Verlässt eine zuvor erkannte Reflexionszone den von dem Bild abgebildeten Bereich oder wird eine Reflexionszone als nicht mehr relevant eingestuft, so kann das Umfeld des Fahrzeugs wieder auf herkömmliche Art ausgeleuchtet werden. Entsprechend kann das Umfeld wieder auf herkömmliche Art ausgeleuchtet werden, wenn die Sicht nicht mehr als schlecht sondern als gut eingestuft wird. Wird eine bisherige Reflexionszone als nicht mehr relevant eingestuft, weil sie durch eine neu erkannte und als relevanter eingestufte Reflexionszone ersetzt wird, so kann im Folgenden anstelle der bisherigen Reflexionszone die neu erkannte Reflexionszone hervorgehoben werden. Ein solcher Vorgang kann beispielsweise stattfinden, wenn sich ein überholendes Fahrzeug zwischen zwei Fahrzeuge einfädelt. In diesem Fall kann für das hintere Fahrzeug die Reflexionszone des überholenden Fahrzeugs als relevant eingestuft und entsprechend beleuchtet werden.

Die beschriebenen und in den Figuren gezeigten Ausführungsbeispiele sind nur beispielhaft gewählt.

## Patentansprüche

1. Verfahren zur Ansteuerung eines Scheinwerfers eines Fahrzeugs, das die folgenden Schritte umfasst:
Durchführen (341) einer Bildauswertung, um in zumindest einem Bild eines Umfelds des Fahrzeugs (100) eine Reflexionszone (121, 122) eines sich im Umfeld des Fahrzeugs befindlichen Objekts (102) in Form eines dem Fahrzeug (100) vorausfahrenden Führungsfahrzeugs zu erkennen; und
Bereitstellen (343) eines Ansteuersignals zum Ansteuern des Scheinwerfers (110), wobei das Ansteuersignal ausgebildet ist, um eine Lichtaussendung des Scheinwerfers (110) auf die Reflexionszone (121, 122) zu konzentrieren um die Lichtaussendung (131, 132) des Scheinwerfers in Richtung der Reflexionszone zu intensivieren, um ein Führungslicht zu schaffen, dem der Fahrer des Fahrzeugs folgen kann.

2. Verfahren gemäß Anspruch 1, mit einem Schritt des Beurteilens einer in dem Umfeld des Fahrzeugs (100) herrschenden Sicht, wobei der Schritt des Bereitstellens (343) des Ansteuersignals durchgeführt wird, wenn die Sicht als schlecht beurteilt wird und zumindest der Schritt des Bereitstellens des Ansteuersignals nicht durchgeführt wird, wenn die Sicht als gut beurteilt wird.

3. Verfahren gemäß einem der vorangegangenen Ansprüche, mit einem Schritt des Ermittelns des Objekts (102) als ein bezüglich einer von einem Fahrer des Fahrzeugs (100) durchzuführenden Fahraufgabe relevantes Objekt.

4. Verfahren gemäß einem der vorangegangenen Ansprüche, bei dem das Ansteuersignal ausgebildet ist, um zumindest einen Lichtstrahl (131, 132) des Scheinwerfers (110) auf die Reflexionszone (121, 122) auszurichten, um die Lichtaussendung des Scheinwerfers in Richtung der Reflexionszone zu intensivieren.

5. Verfahren gemäß einem der vorangegangenen Ansprüche, bei dem das Ansteuersignal ausgebildet ist, um eine Lichtverteilung des Scheinwerfers (110) zu verändern, um die Lichtaussendung (131, 132) des Scheinwerfers in Richtung der Reflexionszone (121, 123) zu intensivieren.

6. Verfahren gemäß einem der vorangegangenen Ansprüche, mit einem Schritt des Erkennens einer Bewegung der Reflexionszone (121, 122) relativ zu dem Fahrzeug (100) und mit einem Schritt des Bereitstellens eines weiteren Ansteuersignals zum Ansteuern des Scheinwerfers (110), wobei das weitere Ansteuersignal ausgebildet ist, um eine weitere Lichtaussendung (131, 132) des Scheinwerfers der Bewegung der Reflexionszone nachzuführen.

7. Vorrichtung (200) zur Ansteuerung eines Scheinwerfers eines Fahrzeugs (100), umfassend eine Einrichtung (241) zum Durchführen einer Bildauswertung und eine Einrichtung (243) zum Bereitstellen eines Ansteuersignals zum Ansteuern des Scheinwerfers (110), **dadurch gekennzeichnet, dass** die Vorrichtung (200) ausgebildet ist, die Schritte eines Verfahrens gemäß einem der Ansprüche 1 bis 6 durchzuführen.

8. Computer-Programmprodukt mit Programmcode zur Durchführung des Verfahrens nach einem der Ansprüche 1 bis 6, wenn das Programm auf einem Computer ausgeführt wird.

## Claims

1. Method for actuating a headlamp of a vehicle, which comprises the following steps:
carrying out (341) an image evaluation to detect, in at least one image of a vicinity of the vehicle (100), a reflection zone (121, 122) of an object (102), located in the vicinity of the vehicle, in the form of a leading vehicle driving ahead of the vehicle (100); and
providing (343) an actuation signal for actuating the headlamp (110), wherein the actuation signal is designed to concentrate a light emission of the headlamp (110) onto the reflection zone (121, 122) in order to intensify the light emission (131, 132) of the headlamp in the direction of the reflection zone in order to establish a guide light, which the driver of the vehicle can follow.

2. Method according to Claim 1, having a step of assessing a view prevailing in the vicinity of the vehicle (100), wherein the step of providing (343) the actuation signal is carried out if the view is assessed as poor and at least the step of providing the actuation signal is not carried out if the view is assessed as good.

3. Method according to either of the preceding claims, having a step of ascertaining the object (102) as a relevant object with respect to a driving task to be carried out by a driver of the vehicle (100).

4. Method according to any of the preceding claims, wherein the actuation signal is designed to direct at least one light beam (131, 132) of the headlamp (110) onto the reflection zone (121, 122) in order to intensify the light emission of the headlamp in the direction of the reflection zone.

5. Method according to any of the preceding claims, wherein the actuation signal is designed to change a light distribution of the headlamp (110) in order to intensify the light emission (131, 132) of the headlamp in the direction of the reflection zone (121, 123).

6. Method according to any of the preceding claims, having a step of detecting a movement of the reflection zone (121, 122) relative to the vehicle (100) and having a step of providing an additional actuation signal for actuating the headlamp (110), wherein the additional actuation signal is designed to update an additional light emission (131, 132) of the headlamp in accordance with the movement of the reflection zone.

7. Device (200) for actuating a headlamp of a vehicle (100), comprising an apparatus (241) for carrying out an image evaluation and an apparatus (243) for providing an actuation signal for actuating the headlamp (110), **characterized in that** the device (200) is designed to carry out the steps of a method according to any of Claims 1 to 6.

8. Computer program product having program code for carrying out the method according to any of Claims 1 to 6, when the program is executed on a computer.

## Revendications

1. Procédé de commande d'un phare de véhicule, comprenant les étapes suivantes :
l'exécution (341) d'une évaluation d'image pour détecter, dans au moins une image d'un environnement du véhicule (100), une zone de réflexion (121, 122) d'un objet (102) situé dans l'environnement du véhicule sous la forme d'un véhicule de guidage circulant devant le véhicule (100) ; et
la production (343) d'un signal de commande pour commander le phare (110), dans lequel le signal de commande est conçu pour concentrer une émission lumineuse du phare (110) vers la zone de réflexion (121, 122) afin d'intensifier l'émission lumineuse (131, 132) du phare en direction de la zone de réflexion pour fournir une lumière de guidage que le conducteur du véhicule peut suivre.

2. Procédé selon la revendication 1, comprenant une étape de jugement de la visibilité existant dans l'environnement du véhicule (100), dans lequel l'étape de production (343) du signal de commande est exécutée lorsque la visibilité est jugée mauvaise et au moins l'étape de production du signal de commande n'est pas exécutée lorsque la visibilité est jugée satisfaisante.

3. Procédé selon l'une des revendications précédentes, comprenant une étape de détermination de l'objet (102) comme étant un objet pertinent pour une tâche devant être exécutée par un conducteur du véhicule (100).

4. Procédé selon l'une des revendications précédentes, dans lequel le signal de commande est conçu pour orienter au moins un faisceau lumineux (131, 132) du phare (110) vers la zone de réflexion (121, 122) afin d'intensifier l'émission lumineuse du phare en direction de la zone de réflexion.

5. Procédé selon l'une des revendications précédentes, dans lequel le signal de commande est conçu pour modifier une répartition lumineuse du phare (110) afin d'intensifier l'émission lumineuse (131, 132) du phare en direction de la zone de réflexion (121, 123).

6. Procédé selon l'une des revendications précédentes, comprenant une étape de détection d'un mouvement de la zone de réflexion (121, 122) par rapport au véhicule (100) et une étape de production d'un autre signal de commande pour commander le phare (110), dans lequel l'autre signal de commande est conçu pour faire en sorte qu'une autre émission lumineuse (131, 132) du phare poursuive le mouvement de la zone de réflexion.

7. Dispositif (200) de commande d'un phare de véhicule (100), comprenant un moyen (241) pour exécuter une évaluation d'image et un moyen (243) pour produire un signal de commande pour commander le phare (110), **caractérisé en ce que** le dispositif (200) est conçu pour exécuter les étapes d'un procédé selon l'une des revendications 1 à 6.

8. Produit de programme informatique comprenant un code de programme permettant de mettre en œuvre le procédé selon l'une des revendications 1 à 6 lorsque le programme est exécuté sur un ordinateur.
